# FASCICULE DE BREVET EUROPEEN

(11) **EP 2 446 245 B1**
(45) Date de publication et mention de la délivrance du brevet: **07.10.2015**
(21) Numéro de dépôt: 10734181.0
(22) Date de dépôt: 24.06.2010
(51) Int. Cl.: G01N 21/47, G01N 21/84, G01N 21/49, G01N 15/02

(54) **GRANULOMETRE PERFECTIONNE**
VERBESSERTER PARTIKELGRÖSSENANALYSATOR
IMPROVED PARTICLE SIZE ANALYZER

(30) Priorité: 26.06.2009 FR 0903167
(43) Date de publication de la demande: 02.05.2012
(73) Titulaire: IFP Energies nouvelles, 92852 Rueil-Malmaison Cedex (FR); Cordouan Technologies, 33600 Pessac (FR)
(72) Inventeur: FROT, Didier, F-78100 Saint-Germain-en-Laye (FR); JACOB, David, F-33610 Canejan (FR)
(86) Numéro de dépôt international: PCT/FR2010/000470
(87) Numéro de publication internationale: WO 2010/149885

(56) Documents cités:
- EP-A1- 0 654 661
- JP-A- 8 178 825
- JP-A- 9 236 534
- JP-A- 10 325 791
- US-A- 4 402 614
- US-A1- 2002 034 762
- US-B1- 6 614 532
- US-B1- 6 628 397

## Description

La présente invention concerne un dispositif perfectionné pour mesurer l'intensité de la lumière diffusée par des concentrations élevées de particules ou macromolécules de taille comprise entre quelques nanomètres et plusieurs centaines de nanomètres. Elle s'applique plus particulièrement à la corrélation de photons en milieux liquides.

Les mesures de l'intensité de la lumière diffusée par des films minces, notamment de milieux colloïdaux, est la base de l'objet de la présente invention.

On connaît le document EP-0654661A1 qui décrit des mesures de diffusion de la lumière opérées sur un film mince réalisé au moyen d'une première interface dioptrique et d'un doigt de mesure. La figure 1 montre en coupe le dispositif selon ce document antérieur. Il comporte un prisme P, d'angle A=90°, chargé de réfléchir totalement le faisceau laser L. Les différentes faces du prisme forment chacune un dioptre, c'est-à-dire une surface optique séparant deux milieux d'indice de réfraction différents. Le rayon laser entre par la face E, est totalement réfléchi par la face sécante F et sort par la normale de la face S. La face S est surmontée d'une pièce N percée et délimitant une cuve d'accueil d'un certain volume d'échantillon contenant les objets M à analyser. Le dispositif comprend en outre un micro positionneur G maintenant une barre H portant à son extrémité un barreau D en verre noir pour limiter l'intensité lumineuse réfléchie ou diffusée, intensité parasite qui ne doit pas atteindre le photo détecteur I. Avantageusement, le barreau D présente un rayon de courbure (convexe) de façon à ponctuellement garantir un film aussi fin que possible et à créer une zone d'analyse très ponctuelle de l'ordre de 1 mm².

Cependant, ce dispositif de l'art antérieur présente un certains nombre d'inconvénients:
- endommagement de la surface du barreau, et/ou du prisme, après plusieurs utilisations susceptible de conduire à des artefacts du fait de l'intensité diffusée par ces micro rayures qui apparaissent dans le temps,
- la fabrication du doigt convexe est délicate. En effet, l'opération de polissage (tolérance Lambda/4) est difficile sur des formes courbes et augmente significativement le coût de cette pièce,
- le barreau noir peut procurer des réflectivités résiduelles qui interfèrent sur la mesure,
- il est impossible de réaliser une mesure sous écoulement sans que celui-ci perturbe la mesure du fait de la faible surface de contact du barreau.

Ainsi, la présente invention perfectionne le dispositif antérieur en fournissant notamment une nouvelle géométrie de doigt et de barreau permettant, entre autres, de réaliser une mesure sous écoulement de liquide dans la cellule, de faciliter la fabrication du barreau, de permettre un mode simplifié de mise en oeuvre des mesures, et de ne pas endommager le dioptre par rayure de sa surface.

La présente invention concerne un dispositif pour mesurer l'intensité de la lumière diffusée par un film mince d'un milieu colloïdal comprenant:
- une source lumineuse monochromatique,
- un système optique convergent focalisant ladite source sur le film mince à analyser et comprenant un élément dioptrique dont une des faces constitue une première paroi délimitant le film mince,
- au moins un détecteur photosensible réagissant à la lumière diffusée ou rétro diffusée par le film mince,
- des moyens de traitement du signal issu du photo détecteur.

Selon le dispositif, une autre deuxième paroi est formée par une surface plane à l'extrémité d'un barreau, et le dispositif comporte des moyens de positionnement de la surface plane à une distance déterminée de la première paroi et des moyens de maintien du parallélisme entre les deux parois.

Le barreau peut être en matériau transparent monté dans un corps.

La face de l'autre extrémité du barreau peut faire un angle α avec ladite surface plane et être en contact avec un liquide d'indice de réfraction déterminé pour limiter les perturbations de réflexion et de diffusion.

L'extrémité du corps peut comporter des moyens d'étanchéité de façon à isoler le film mince présent sous le barreau.

Le doigt peut comporter des moyens de rotation autour de son axe et peut porter des moyens de nettoyage sur une portion de ladite surface plane.

Le corps peut comporter un objectif optique et un capteur CCD.

L'extrémité du barreau peut comporter des électrodes adaptées à effectuer des mesures de potentiel Zêta sur le film mince.

Le barreau monté dans un corps peut être assemblé sur un carter qui enferme l'élément dioptrique, ledit carter comportant un orifice d'entrée et un orifice de sortie du milieu colloïdal permettant une circulation dudit milieu dans le carter.

La source lumineuse peut être transportée au système optique par fibre optique, le signal d'intensité diffusé peut être amenée aux moyens de mesure également par fibre optique.

La surface plane peut avoir une aire d'au moins 10 mm².

La présente invention sera mieux comprise et ses avantages apparaîtront plus clairement à la lecture de la description suivante de modes de réalisation, nullement limitatifs, illustrés par les figures ci-après annexées, parmi lesquelles:

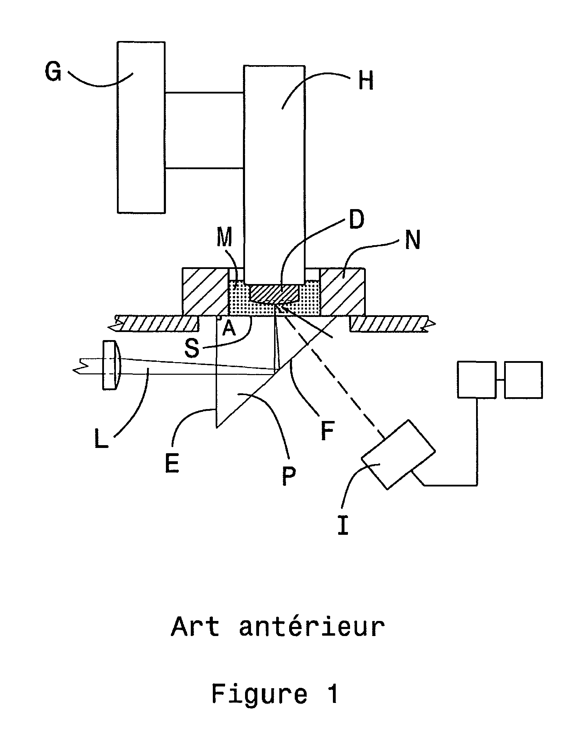

- la figure 1 représente schématiquement un dispositif selon l'art antérieur,
- la figure 2a illustre schématiquement, en coupe le doigt du dispositif selon l'invention,
- la figure 2b illustre une variante du montage du doigt,
- les figures 3a et 3b montrent une variante de l'extrémité du barreau,
- la figure 4 montre schématiquement une autre variante du doigt qui porte le barreau,
- la figure 5 montre un dispositif additionnel pour effectuer un autre type de mesure,
- la figure 6 illustre le dispositif selon l'invention pour des mesures en circulation,
- les figures 7, 8, 9 montrent des résultats de mesures obtenues respectivement pour un échantillonnage de milieux étalons: - sans écoulement, - avec écoulement et le doigt levé, - avec écoulement et le doigt en position de contact.

La présente invention repose sur un doigt capable de réaliser un film mince entre deux surfaces planes présentant un grand niveau de parallélisme, ledit film mince de milieux colloïdaux permettant des mesures de l'intensité diffusée.

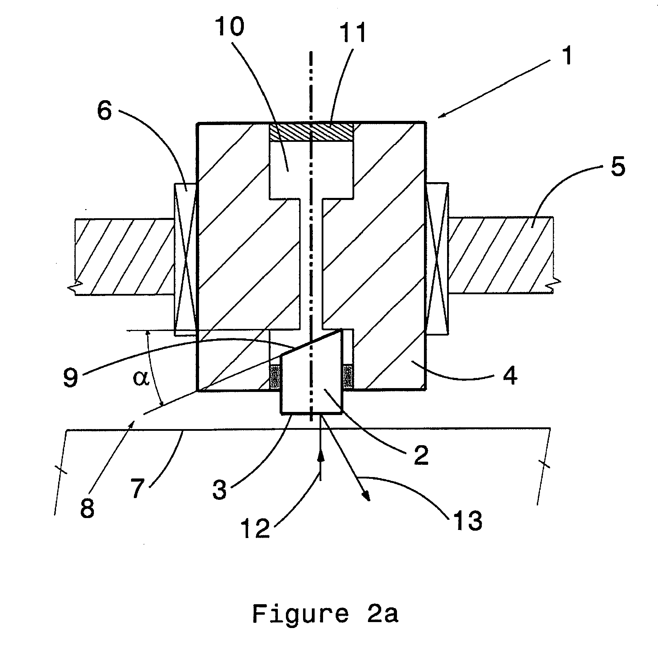

La figure 2a montre schématiquement les moyens de réalisation du dispositif selon l'invention. Le doigt 1 se compose d'un barreau 2 en verre, ou équivalent, qui définit à son extrémité une surface plane 3. Le barreau est tenu dans un corps 4. Les spécifications optiques des faces de ce barreau cylindrique sont standards, soit un état de surface de Lambda/4 et une planéité de Lambda/2.

Le corps 4 est lié mécaniquement à une partie supérieure, ou capot, d'un carter 5 par des moyens de fixation et de positionnement 6 qui ont pour fonctions: de faire étanchéité entre le corps et le carter, de fournir des moyens de réglage de l'épaisseur du film mince, c'est-à-dire la distance entre la face inférieure 3 du barreau 2, et d'assurer le parallélisme entre la face 3 du barreau et le dioptre 7.

Le parallélisme entre la face inférieure du doigt et la face supérieure du prisme (dioptre) constituant le fond de la cuve 8 est assuré par auto ajustement grâce à un jeu mécanique fourni par les moyens de fixation 6. On peut réaliser ce jeu par une faible longueur de guidage (par exemple deux fois le diamètre du doigt) du corps du doigt dans le capot du carter. On peut aussi obtenir cet auto ajustement en réglant les tolérances d'usinage de l'alésage du guidage du manchon.

D'une manière inattendue, on a constaté que c'est le drainage du film liquide sous l'action de la poussée exercée sur le doigt qui assure un parfait parallélisme de la face inférieure 3 du doigt avec la face supérieure 7 de la cuve, dans la mesure où le barreau, ou le corps de tenu du barreau, a un degré de liberté suffisant pour s'auto aligner. Ainsi, on peut considérer que le barreau se met en place sur un coussin liquide.

Les moyens de fixation 6 peuvent aussi comporter avantageusement un jeu axial qui permet, par exemple sous une action de tapotement, par exemple par un doigt d'un opérateur, l'élimination du film de fluide ("flushing"). Ce mouvement qui diminue, voire annule l'épaisseur du film, peut être antagoniste à l'action d'un ressort de rappel.

La face supérieure 9 du barreau est de préférence inclinée d'un angle α (environ 5 degré) par rapport à la face inférieure de façon à ne pas perturber la lumière rétro diffusée. De plus, le volume interne 10 au corps 4 contient un milieu de réfraction adaptée à minimiser cette perturbation. Le volume est fermé par un bouchon 11.

Le faisceau laser incident 12 est amené au point de mesure par les moyens optiques connus, notamment ceux décrits dans le document EP-0654661A1, cité ici en référence. Il en est de même pour les moyens de mesures sur le rayon diffusé 13.

Ainsi, le dispositif selon l'invention présente les avantages suivants.
- Lorsque le doigt est en position au contact du prisme, un film liquide emprisonné entre les deux faces planes (dioptres et barreau) est immobile et insensible à l'environnement du barreau, et notamment aux écoulements;
- On peut approcher rapidement le doigt sur le dioptre sans se soucier de l'effet d'impact sur la surface, car le film mince assure une fonction tampon qui protége mutuellement chacune des surfaces des chocs et des rayures;
- On exploite cette configuration pour réaliser la fonction "flushing" qui permet le renouvellement du film mince de l'échantillon et l'optimisation de l'homogénéité en température, concentration et distribution statistique des constituants de l'échantillon dans le cas d'un mélange;
- L'élimination dans le film mince d'analyse d'éventuels agrégats ou des poussières indésirables;
- L'obtention d'un effet de cisaillement dans le film mince qui peut séparer les agrégats faiblement liés;
- Le parallélisme de la face inférieure du doigt avec la face supérieure de la cuve permet de réaliser des anneaux d'interférence concentriques (pas d'effets de coin d'air) et donc de suivre par interférométrie optique précisément l'étape de drainage du film. C'est un indicateur pertinent de l'état stationnaire du film liquide que l'on désire analyser.

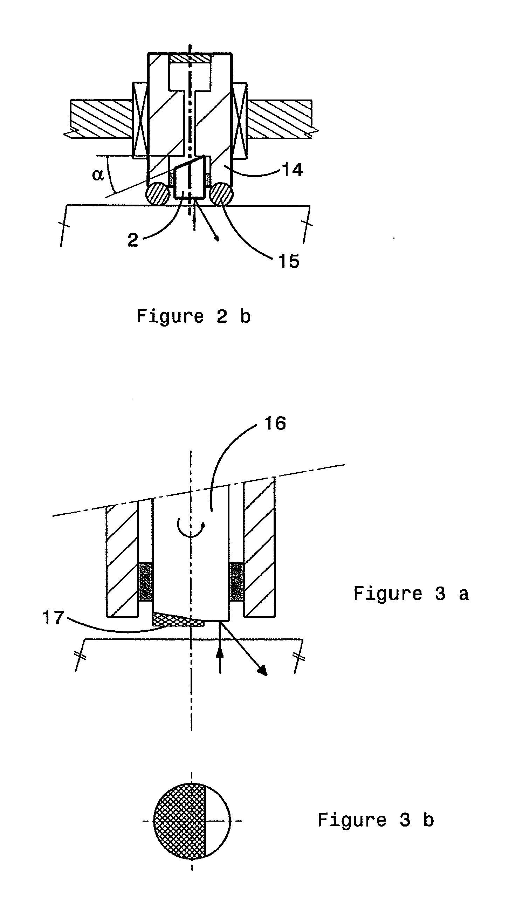

La figure 2b illustre une variante du doigt du dispositif selon l'invention dans laquelle le corps 14 comprend des moyens d'étanchéité en bout 15 aménagés de façon à isoler une portion de milieu autour du film mince piégé sous le barreau. Cette variante est particulièrement adaptée aux milieux fortement dilué, donc faiblement diffusants.

Les figures 3a et 3b illustrent une autre variante d'un barreau 16 tenu dans un corps 4. Le barreau cylindrique porte, sur au moins la moitié de surface de la face, un ensemble nettoyant 17, l'autre partie de la surface restant disponible pour être le point de mesure. Le barreau peut être entraîné en rotation sur son axe longitudinal de façon à nettoyer la surface totale de la face du barreau, notamment le point de mesure, par le moyen de micro bâtonnets partiellement flexibles réalisés dans une matière compatible avec un grand nombre de solvants organiques acides ou basiques. Les milieux industriels sont souvent concentrés et parfois comportent des agrégats lorsque la dispersion n'est pas homogène. Pour remédier aux difficultés d'analyse sur de tels systèmes et plutôt que de filtrer les solutions, on peut utiliser cette solution. La figure 3b montre la face du barreau en vue de dessous.

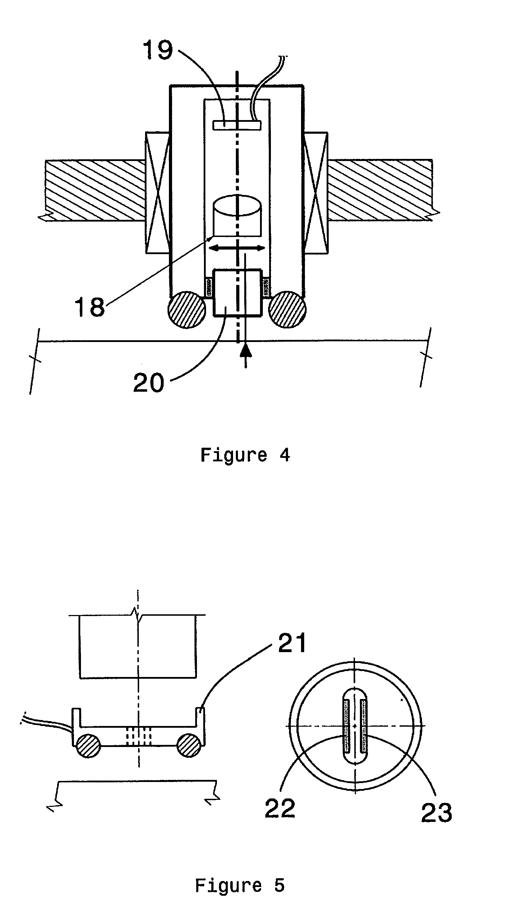

La figure 4 montre une variante de doigt combiné avec un ensemble de constituants optiques 18 équivalents à un objectif de microscope, auquel on adjoint une camera CCD 19. Le barreau 20 peut avoir une épaisseur mince et des faces parallèles. Dans ce cas, il joue le rôle de hublot protecteur pour l'objectif de microscope 18, ce qui permet de ne pas avoir à utiliser un objectif à immersion qui est très onéreux. La mise au point de l'image du film mince sur le capteur CCD est assurée par une bague-allonge (de tirage variable) ou un système de lentille optique à focale variable qui peut être, par exemple, contrôlée électriquement.

La figure 5 illustre une possibilité de mesure complémentaire au comptage de photons. Il s'agit ici de donner accès à une mesure du potentiel Zêta pour une large distribution de particules grâce à la combinaison de l'analyse de l'intensité diffusée (domaine des petites particules généralement inférieur à un micron) avec l'analyse de la mobilité électrophorétique par le moyen d'un traitement d'image (voir ci-dessus), ou du décalage en longueur d'onde de l'intensité diffusée par des particules en mouvement forcée (déplacement unidirectionnel).

Un des modes de réalisation est un barreau cylindrique 21 alésé sur environ un millimètre et comportant deux électrodes métalliques 22 et 23 sur les parois de la zone alésée, et disposées parallèlement l'une par rapport à l'autre. Dans le volume défini par l'alésage lorsque le doigt est au contact, on peut faire la mesure du potentiel Zêta.

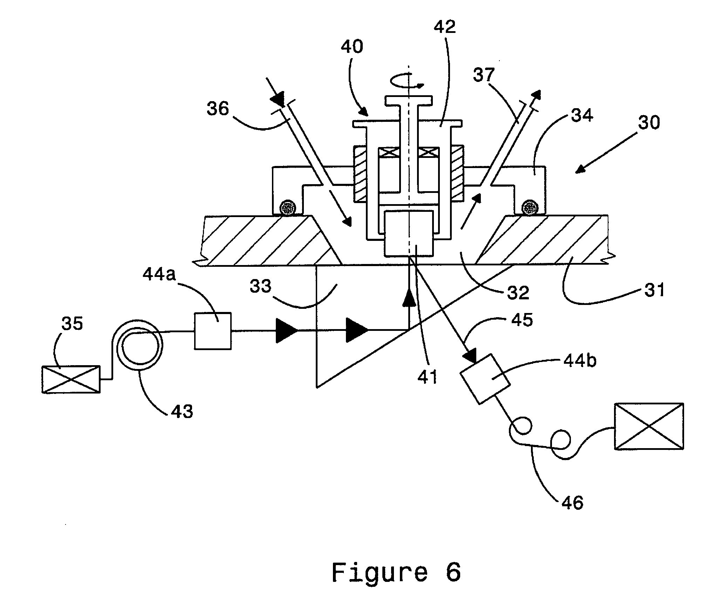

La figure 6 montre un système intégrant le dispositif selon l'invention pour des mesures en ligne. Le dispositif 30 comporte un support 31 percé d'une cavité 32 refermée par un prisme 33 et un carter 34. Le carter 34 est en communication hydraulique par des conduits 36 et 37. L'ensemble du doigt de mesure 40 est constitué par un barreau 41 et un corps 42 selon la présente description. Le faisceau laser 35 peut être transporté jusqu'au prisme 33 par une fibre optique 43 et un collimateur 44a, et le signal de l'intensité dissusée 45 collecté par un collimateur 44b peut être envoyé aux moyens de mesure et au PC par une fibre optique 46. D'une manière générale, les signaux optiques peuvent être "déportées" par le moyen de fibres optiques, que ce soit dans la version "mesure en ligne" selon la figure 6 , ou non.

Le système selon la figure 6 permet une méthode de mesure qui repose sur les fonctionnalités du dispositif de doigt capable de délimiter un film mince entre deux parois. Ce doigt possède deux positions: l'une éloignée, l'autre dite "au contact" du prisme pour faire la mesure.

Lorsque le doigt est éloigné de la paroi, le fluide circule dans la cavité 32 et se renouvelle en fonction de la circulation du milieu dans les conduites 35 et 36. Lorsque l'on impose au doigt d'être au contact du prisme, en maintenant une pression déterminée sur ce dernier, il immobilise et isole au moins une partie d'un film liquide piégé entre les deux interfaces tout en permettant à l'écoulement de contourner le doigt sans perturbation de la mesure. Ceci est possible grâce à la surface plane suffisamment large du barreau qui permet d'isoler le point de mesure de son environnement. Le barreau a, par exemple, un diamètre au moins supérieur à 5 mm de façon à garantir un isolement suffisant d'une portion, au moins, du film liquide, combinée à l'auto ajustement du parallélisme des faces au point de mesure. On note que dans ce domaine de mesure sous écoulement de l'intensité diffusée, le parallélisme des faces est une condition essentielle pour la mesure.

On peut aussi, selon la variante décrite en figure 2b, immobiliser le film liquide en intégrant un joint à l'extrémité du corps. Le joint est choisit suffisamment souple, pour qu'une fois comprimé, la surface du doigt soit au contact avec le dioptre inférieur en isolant un film.

On peut aussi, selon la variante décrite en figure 4, équiper le doigt d'un objectif de microscope et d'une camera. Le fait de faire des mesures sur un film liquide au repos, n'impose pas d'utiliser une caméra rapide pour imager les particules. Dans ces conditions, l'utilisation d'une caméra avec une grande résolution spatiale (grand nombre de pixel de petite taille) présente l'avantage de pouvoir faire des mesures sur des particules de plus petites tailles.

La mise en oeuvre du dispositif de mesure selon l'invention présente donc de nombreux avantages:
- Il n'est pas nécessaire de prélever un échantillon, ce qui élimine le doute sur la représentativité de l'échantillon et simplifie le mode opératoire de la mesure. En effet, le milieu liquide issu d'un procédé peut être conduit directement dans la cavité de mesure 32 par les canalisations 36 ou 37.
- La mesure peut être répétée à volonté, doigt éloigné puis doigt au contact, sans perte de charge sur la ligne.
- C'est une mesure classique de diffusion dynamique de la lumière sans avoir à faire des hypothèses supplémentaires sur le mouvement des particules.

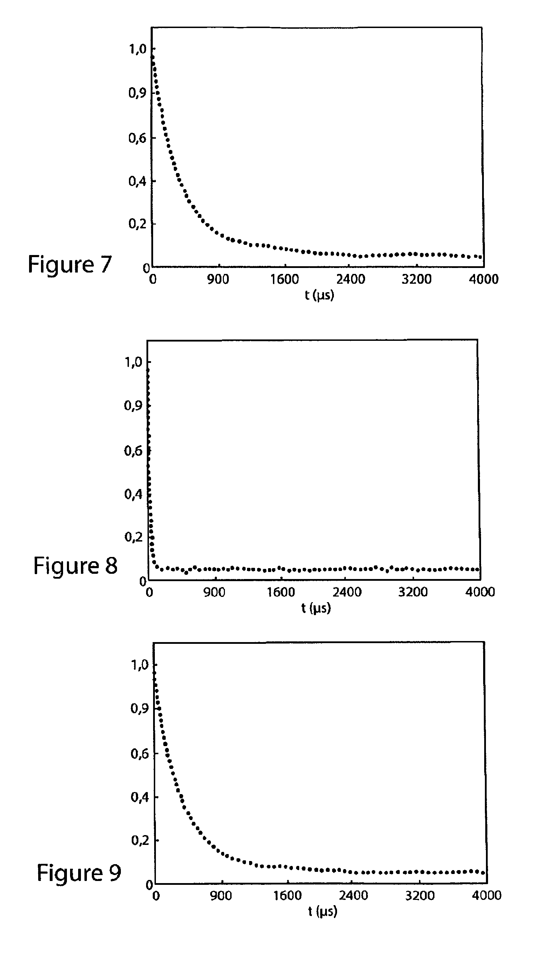

Les figures 7, 8 et 9 montrent l'efficacité du dispositif et de la méthode de mesure.

Ces graphes représentent la fonction d'auto corrélation de l'intensité diffusée avec en abscisse le temps et en ordonnées l'amplitude. C'est à partir de ces courbes que l'on extrait la taille des objets responsables de l'intensité diffusée. La figure 7 représente la courbe d'auto corrélation d'un étalon de référence, ici un étalon de latex monomodal de 160 nanomètres de diamètre hydrodynamique. Il est connu qu'il existe une relation de proportionnalité entre la taille des objets et la pente à l'origine de la courbe d'auto corrélation.

La Figure 8 donne la courbe d'auto corrélation du même étalon en présence d'un écoulement (avec un système du type représenté sur la figure 6) avec le doigt éloigné de la surface du prisme. On constate qu'un écoulement modifie la pente à l'origine puisque celle-ci est approximativement ici 30 fois plus petite que celle obtenue par la mesure de l'étalon (figure 7). Ceci a pour conséquence de diminuer la taille apparente du même facteur produisant comme résultat des pseudo objets de 6 nanomètres au lieu de 160 nm.

La figure 9 donne la courbe d'auto corrélation du même étalon en présence d'un écoulement, mais avec le doigt au contact de la surface. La mesure réalisée avec le doigt au contact donne un résultat de mesure de taille en accord avec celle obtenue pour l'étalon en l'absence d'écoulement, ce qui montre bien qu'au moins une partie du film piégé sous le barreau est immobile.

## Revendications

1. Dispositif pour mesurer l'intensité de la lumière diffusée par un film mince d'un milieu colloïdal comprenant:
- une source lumineuse monochromatique,
- un système optique convergent focalisant la lumière de ladite source sur ledit film mince à analyser et comprenant un élément dioptrique (7) dont une des faces constitue une première paroi délimitant le film mince,
- au moins un détecteur photosensible réagissant à la lumière diffusée ou rétro diffusée par le film mince,
- des moyens de traitement du signal issu dudit photo détecteur, **caractérisé en ce que** une autre deuxième paroi est formée par une surface plane (3) à l'extrémité d'un barreau (2), et **en ce que** ledit dispositif comporte des moyens de positionnement de ladite surface plane à une distance déterminée de ladite première paroi et des moyens de maintien du parallélisme entre lesdites deux parois.

2. Dispositif selon la revendication 1, dans lequel le barreau est en matériau transparent monté dans un corps (4).

3. Dispositif selon la revendication 1 ou 2, dans lequel la face (9) de l'autre extrémité du barreau fait un angle α avec ladite surface plane et est en contact avec un liquide d'indice de réfraction déterminé pour limiter les perturbations de réflexion et de diffusion.

4. Dispositif selon l'une des revendications 2 ou 3, dans lequel l'extrémité du corps comporte des moyens d'étanchéité (15) de façon à isoler le film mince présent sous le barreau.

5. Dispositif selon l'une des revendications précédentes, dans lequel le barreau comporte des moyens de rotation autour de son axe et porte sur une portion de ladite surface plane des moyens de nettoyage (17).

6. Dispositif selon la revendication 2, dans lequel le corps comporte un objectif optique (18) et un capteur CCD (19).

7. Dispositif selon l'une des revendications précédentes, dans lequel l'extrémité du barreau comporte des électrodes (22, 23) adaptées à effectuer des mesures de potentiel Zêta sur le film mince.

8. Dispositif selon l'une des revendications précédentes, dans lequel le barreau (41) monté dans un corps (42) est assemblé sur un carter (34) qui enferme l'élément dioptrique (33), ledit carter comportant un orifice d'entrée (36) et un orifice de sortie (37) du milieu colloïdal permettant une circulation dudit milieu dans le carter.

9. Dispositif selon l'une des revendications précédentes, dans lequel la source lumineuse est transportée au système optique par fibre optique (43), et dans lequel le signal d'intensité diffusé est amenée aux moyens de mesure également par fibre optique (46).

10. Dispositif selon l'une des revendications précédentes, dans lequel ladite surface plane (3) a une aire d'au moins 10 mm².

## Patentansprüche

1. Vorrichtung zum Messen der Intensität des Lichtes, das von einem dünnen Film eines kolloidalen Mediums gestreut wird, umfassend:
- eine monochromatische Lichtquelle,
- ein konvergentes optisches System, welches das Licht dieser Quelle auf den zu analysierenden dünnen Film fokussiert und ein dioptrisches Element (7) umfasst, von dem eine der Seiten eine erste Wand bildet, die den dünnen Film begrenzt,
- wenigstens einen photoempfindlichen Detektor, der auf das von dem dünnen Film gestreute oder rückgestreute Licht reagiert,
- Mittel zur Verarbeitung des von dem Photodetektor ausgegebenen Signals,
**dadurch gekennzeichnet, dass** eine andere, zweite Wand von einer ebenen Fläche (3) am Ende eines Stabes (2) gebildet wird, und dadurch, dass die Vorrichtung Mittel zur Positionierung der ebenen Fläche in einem bestimmten Abstand von der ersten Wand und Mittel zur Aufrechterhaltung der Parallelität zwischen den zwei Wänden aufweist.

2. Vorrichtung nach Anspruch 1, wobei der Stab aus einem durchsichtigen Material besteht, das in einem Körper (4) angebracht ist.

3. Vorrichtung nach Anspruch 1 oder 2, wobei die Seite (9) des anderen Endes des Stabes einen Winkel α mit der ebenen Fläche bildet und sich in Kontakt mit einer Flüssigkeit mit einem bestimmten Brechungsindex befindet, um die Reflexions- und Diffusionsstörungen zu begrenzen.

4. Vorrichtung nach einem der Ansprüche 2 oder 3, wobei das Ende des Körpers Dichtmittel (15) aufweist, um den unter dem Stab vorhandenen dünnen Film zu isolieren.

5. Vorrichtung nach einem der vorhergehenden Ansprüche, wobei der Stab Mittel zur Rotation um seine Achse aufweist und auf einem Abschnitt der ebenen Fläche Reinigungsmittel (17) trägt.

6. Vorrichtung nach Anspruch 2, wobei der Körper ein optisches Objektiv (18) und einen CCD-Sensor (19) aufweist.

7. Vorrichtung nach einem der vorhergehenden Ansprüche, wobei das Ende des Stabes Elektroden (22, 23) aufweist, die geeignet sind, Zeta-Potential-Messungen an dem dünnen Film durchzuführen.

8. Vorrichtung nach einem der vorhergehenden Ansprüche, wobei der in einem Körper (42) angebrachte Stab (41) auf einem Gehäuse (34) montiert ist, welches das dioptrische Element (33) umschließt, wobei dieses Gehäuse eine Eintrittsöffnung (36) und eine Austrittsöffnung (37) für das kolloidale Medium aufweist, die eine Zirkulation dieses Mediums in dem Gehäuse ermöglichen.

9. Vorrichtung nach einem der vorhergehenden Ansprüche, wobei die Lichtquelle durch einen Lichtwellenleiter (43) zu dem optischen System transportiert wird, und wobei das gestreute Intensitätssignal den Messmitteln ebenfalls durch einen Lichtwellenleiter (46) zugeführt wird.

10. Vorrichtung nach einem der vorhergehenden Ansprüche, wobei die ebene Fläche (3) einen Flächeninhalt von wenigstens 10 mm² aufweist.

## Claims

1. A device for measuring the intensity of the light scattered by a thin film of a colloidal medium, comprising:
- a monochromatic light source,
- a convergent optical system focusing the light of said source onto said thin film to be analysed and comprising a dioptric element (7) one of the faces of which constitutes a first wall delimiting the thin film,
- at least one photosensitive detector reacting to the light scattered or backscattered by the thin film,
- means for processing the signal coming from said photodetector, **characterized in that** another, second wall is made up of a plane surface (3) at the end of a rod (2), and **in that** said device comprises means for positioning said plane surface at a predetermined distance from said first wall and means for maintaining the parallelism between said two walls.

2. A device as claimed in claim 1, wherein the rod is made of a transparent material mounted in a body (4).

3. A device as claimed in claim 1 or 2, wherein face (9) of the other end of the rod forms an angle α with said plane surface and is in contact with a liquid of predetermined refractive index so as to limit reflection and scattering disturbances.

4. A device as claimed in any one of claims 2 or 3, therein the end of the body comprises sealing means (15) for insulating the thin film present below the rod.

5. A device as claimed in any one of the previous claims, wherein the rod comprises means of rotation about the axis thereof and it carries cleaning means (17) over a portion of said plane surface.

6. A device as claimed in claim 2, therein the body comprises an optical lens (18) and a CCD detector (19).

7. A device as claimed in any one of the previous claims, wherein the end of the rod comprises electrodes (22, 23) suited for Zeta potential measurements on the thin film.

8. A device as claimed in any one of the previous claims, wherein rod (41) mounted in a body (42) is assembled on a housing (43) including dioptric element (33), said housing comprising an inlet orifice (36) and an outlet orifice (37) for the colloidal medium, allowing circulation of said medium in the housing.

9. A device as claimed in any one of the previous claims, wherein the light source is carried to the optical system by an optical fiber (43), and the scattered intensity signal is carried to the measuring means also by an optical fiber (46).

10. A device as claimed in any one of the previous claims, wherein said plane surface (3) has a surface area of at least 10 mm².
